# EUROPÄISCHE PATENTSCHRIFT

(11) **EP 2 244 928 B1**
(45) Veröffentlichungstag und Bekanntmachung des Hinweises auf die Patenterteilung: **20.11.2013**
(21) Anmeldenummer: 09714978.5
(22) Anmeldetag: 21.02.2009
(51) Int. Cl.: B62D 21/02, B62D 21/09

(54) **KAROSSERIE EINES KRAFTFAHRZEUGS MIT EINEM LÄNGSTRÄGER IN SCHALENBAUWEISE UND EINER TIEFGEZOGENEN BUCHSE**
MOTOR VEHICLE BODY COMPRISING A SHELL-TYPE LONGITUDINAL BEAM AND A DEEP-DRAWN BUSH
CARROSSERIE D'UNE AUTOMOBILE COMPRENANT UN LONGERON À STRUCTURE À REVÊTEMENT PORTEUR ET UNE TÔLE EMBOUTIE

(30) Priorität: 28.02.2008 DE 102008011635
(43) Veröffentlichungstag der Anmeldung: 03.11.2010
(73) Patentinhaber: Bayerische Motoren Werke Aktiengesellschaft, 80809 München (DE)
(72) Erfinder: DENGL, Detlev, 81379 München (DE)
(86) Internationale Anmeldenummer: PCT/EP2009/001259
(87) Internationale Veröffentlichungsnummer: WO 2009/106276

(56) Entgegenhaltungen:
- WO-A-2004/062988
- DE-A1- 2 930 695
- FR-A- 2 769 266
- JP-A- 2000 219 147

## Beschreibung

Die Erfindung betrifft eine Karosserie eines Kraftfahrzeugs mit einem Längsträger in Schalenbauweise, an dem ein Fahrwerkteil befestigbar ist.

Aus der FR 2 769 266 A1 ist bereits eine gattungsgemäße Karosserie eines Kraftfahrzeugs mit einem Längsträger in Schalenbauweise bekannt, wobei an oder in dem Längsträger eine Buchse angebracht ist, die zur Befestigung eines Fahrwerkteils dient, wobei die Buchse ein tiefgezogenes Blechbauteil ist.

Ferner ist aus der DE 42 12 180 A1 ein Längsträger einer Karosserie eines Kraftfahrzeugs bekannt, an dem ein Fahrwerkteil anschraubbar ist. Der Längsträger besteht aus zwei Blechschalen, die einen Hohlraum umschließen und über zwei Flansche miteinander verbunden sind. An eine der Blechschalen ist eine Buchse mit einem Innengewinde angeschweißt, die in den Hohlraum hineinragt. Auf diese Weise kann das Fahrwerkteil am Längsträger angeschraubt werden.

Aufgabe der Erfindung ist es, eine Karosserie eines Kraftfahrzeugs mit einem Längsträger zu schaffen, an dem ein Fahrwerkteil kostengünstig befestigbar ist.

Diese Aufgabe wird mit einer Karosserie eines Kraftfahrzeugs mit einem Längsträger in Schalenbauweise mit den Merkmalen des Patentanspruchs 1 gelöst.

Erfindungsgemäß ist die Buchse ein tiefgezogenes Blechbauteil. Tiefgezogene Blechbauteile sind sehr kostengünstig herstellbar. Eine tiefgezogene Buchse ist wesentlich billiger als eine aus einem Stangenmaterial kalt "geschmiedete" Buchse, wie sie aus dem Stand der Technik bekannt ist. Zudem hat sie den Vorteil, dass sie mit dem Längsträger in Blechschalenbauweise punktverschweißbar ist, während die bekannte kalt "geschmiedete" Buchse mit dem Längsträger in vielen Fällen nur unter Schutzgas verschweißbar ist.

Zusätzlich ist in dem Längsträger mindestens ein Abstützblech angebracht, das mit der Buchse verbunden ist. Dieses Abstützblech versteift die Befestigung der Buchse am Längsträger und gewährleistet so eine verwindungssteife Anbindung des Fahrwerkteils. Dies ist für die fahrdynamischen und akustischen Eigenschaften des Fahrzeugs von großer Bedeutung. Das Abstützblech ermöglicht es auf einfache Weise, die Anforderungen bezüglich einer verwindungssteifen Anbindung des Fahrwerkteils optimal zu erfüllen. Dabei sind die Buchse und das zumindest eine Abstützblech vor dem Verbinden mit dem Längsträger zu einer Vormontageeinheit miteinander verschweißt worden. Auf diese Weise muss im eigentlichen Rohbau der Fahrzeugkarosserie nur ein Teil am Längsträger bzw. an einer Blechschale des Längsträgers angebracht werden.

Bevorzugt ist die Buchse mit einer der beiden Blechschalen des Längsträgers punktverschweißt und ragt in den Längsträger hinein. Dazu kann die Blechschale eine Ausnehmung aufweisen, in die die Buchse eingesetzt ist. Günstigerweise hat die Buchse einen Kragen, der mit dem die Ausnehmung umgebenden Bereich der Blechschale eine Überlappung bildet. Im Bereich dieser Überlappung können der Kragen der Buchse und die Blechschale miteinander verschweißt werden.

Die gleiche Buchse kann bei unterschiedlichen Fahrzeugtypen oder bei unterschiedlichen Derivaten eines Fahrzeugtyps (z. B. Cabrio, Coupé, etc.) eingesetzt werden. Auch können für unterschiedliche Fahrzeugtypen unterschiedliche Abstützbleche zum Einsatz kommen, während die Buchse stets die gleiche sein kann.

Alternativ können die Buchse und das Abstützblech einteilig ausgeführt sein. Dies ist durch eine Vergrößerung der Blechstreifenbreite möglich, aus der die Buchse und das Abstützblech umgeformt werden. Anschließend wird das umgeformte Blechbauteil noch zur fertigen Buchse mit Abstützblech zusammengeklappt und die Trennung an den Füge-Kanten beispielsweise durch eine Schutzgas-Verriegelung verbunden.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise:
- Fig. 1: eine aus dem Stand der Technik bekannte, kalt geschmiedete Buchse,
- Fig. 2a: eine zweiteilige, tiefgezogene Buchse mit Abstützblech und
- Fig. 2b: eine einteilige, tiefgezogene Buchse mit Abstützblech.

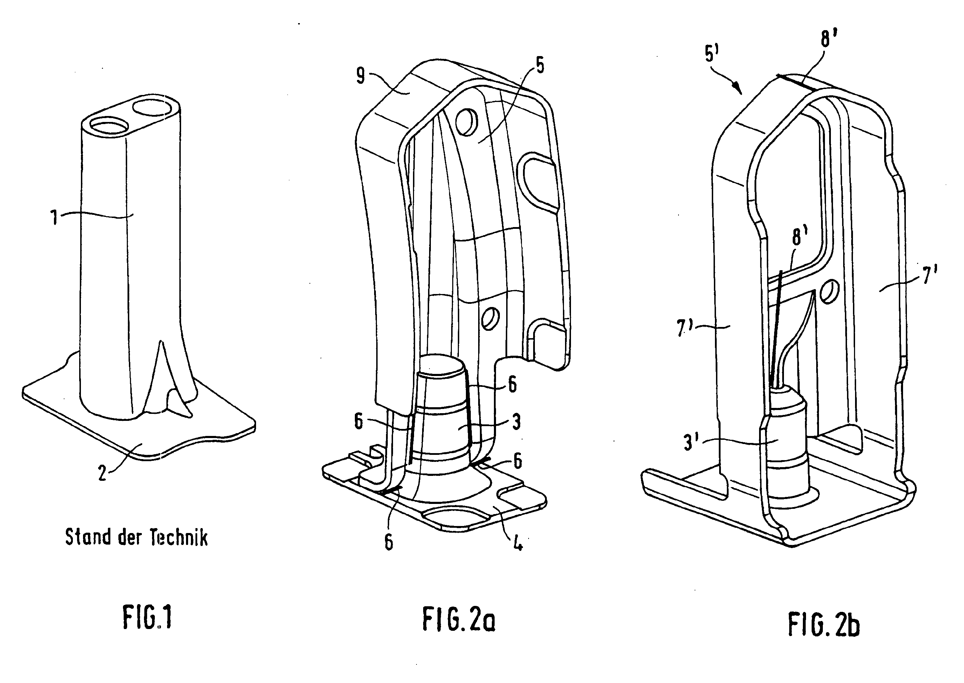

In Fig. 1 ist eine aus dem Stand der Technik bekannte Buchse 1 mit einem Innengewinde dargestellt, die an einem Längsträger einer Fahrzeugkarosserie angebracht ist. Über die Buchse 1 kann an dem Längsträger ein Fahrwerkteil angeschraubt werden. Typischerweise handelt es sich bei dem Längsträger um einen Motorträger, an dem ein Vorderachsträger als Fahrwerkteil angeschraubt ist. Die Buchse 1 ist als Kaltfließpressteil ausgeführt, das einen angeschweißten Kragen 2 aufweist. Der Motorträger besteht in Schalenbauweise aus zwei Blechschalen. An einer der beiden Blechschalen ist die Buchse 1 mit ihrem Kragen 2 angeschweißt. Die restliche Buchse 1 ragt dabei in den Hohlraum hinein, der durch die beiden Blechschalen des Motorträgers gebildet wird. Das Anschweißen des Kragens 2 an die Buchse 1 geht allerdings nur unter Verwendung von Schutzgas.

In Fig. 2a ist im Vergleich dazu eine erfindungsgemäße, aus einer Blechplatine tiefgezogene Buchse 3 mit einem Kragen 4 dargestellt. Die Buchse 3 ist mit einem Abstützblech 5 zu einer Vormontageeinheit entlang der Stoßnähte 6 schutzgasverschweißt. Diese Vormontageeinheit wird so in den Hohlraum eines Längsträgers in Schalenbauweise eingebracht. Das Abstützblech 5 bildet quasi eine Art Schottblech in dem Längsträger. Es liegt mit einem Flansch 9 flächig an den Blechschalen des Längsträgers an und ist mit diesen verschweißt. So erhöht es maßgeblich die Verwindungssteifigkeit der Buchse 3, weil das vom Kragen 4 abgewandte Ende der Buchse 3 sich über das Abstützblech 5 am Längsträger abstützt. Dies ist insbesondere bei der Befestigung eines Vorderachsträgers als Fahrwerkteil an einem Motorträger als Längsträger für das fahrdynamische Verhalten des Kraftfahrzeugs von großer Bedeutung. Die Buchse 3 weist ein Innengewinde auf, sodass das Fahrwerkteil angeschraubt werden kann. Zudem kann die Vormontageeinheit mit dem Längsträger punktverschweißt werden. Auch in der Herstellung ist die tiefgezogene Buchse 3 deutlich kostengünstiger als die kalt geschmiedete Buchse 3. Zudem wird die Buchse 3 aus einem Stahlblech tiefgezogen, was die Festigkeit erheblich erhöht.

In der Fig. 2b ist eine alternative erfindungsgemäße Ausführung einer tiefgezogenen Buchse 3' mit einem Abstützblech 5' dargestellt. Die Buchse 3' und das Abstützblech 5' sind einteilig ausgeführt, sie sind einteilig aus einer Blechplatine tiefgezogen worden. Anschließend wurden der linke und der rechte abstehende Blechabschnitt 7' nach oben gebogen, sodass sie das Abstützblech 5' bilden. Danach wurden die beiden Blechabschnitte 7' entlang der Fügekanten 8' durch eine Schutzgas-Verriegelung miteinander verschweißt. Auch dieses so gebildete Abstützblech 5' fungiert als Schottwand und erhöht die Verwindungssteifigkeit der Buchse 3'.

Die tiefgezogenen Buchsen 3, 3' ermöglichen es zusammen mit dem Abstützblech 5, 5', auf kostengünstige Weise einen sehr verwindungssteifen Anschraubpunkt an einem Längsträger für ein Fahrwerkteil zu schaffen.

## Patentansprüche

1. Karosserie eines Kraftfahrzeugs mit einem Längsträger in Blechschalenbauweise, wobei an oder in dem Längsträger eine Buchse (3, 3') angebracht ist, die zur Befestigung eines Fahrwerkteils dient, wobei die Buchse (3, 3') ein tiefgezogenes Blechbauteil ist, und wobei in dem Längsträger mindestens ein Abstützblech (5, 5') angebracht ist, das mit der Buchse (3, 3') verbunden ist, **dadurch gekennzeichnet, dass** die Buchse (3) und das zumindest eine Abstützblech (5) vor dem Verbinden mit dem Längsträger zu einer Vormontageeinheit miteinander verschweißt wurden.

2. Karosserie nach Anspruch 1, **dadurch gekennzeichnet, dass** die Buchse (3, 3') mit einer der beiden Schalen des Längsträgers punktverschweißt ist und in den Längsträger hineinragt.

3. Karosserie nach Anspruch 1 oder 2, **dadurch gekennzeichnet, dass** die Buchse (3) und das Abstützblech (5) miteinander schutzgasverschweißt sind.

4. Karosserie nach Anspruch 1 oder 2, **dadurch gekennzeichnet, dass** die Buchse (3') und das Abstützblech (5') einteilig ausgeführt sind.

5. Karosserie nach einem der vorhergehenden Ansprüche, **dadurch gekennzeichnet, dass** die Buchse (3, 3') ein Innengewinde aufweist.

## Claims

1. A motor-vehicle body comprising a longitudinal bearer in sheet-metal shell construction, wherein a bush (3, 3') for fastening a part of the running gear is mounted on or in the longitudinal bearer, wherein the bush (3, 3') is a deep-drawn sheet-metal part and wherein at least one metal bracing sheet (5, 5') is disposed in the longitudinal bearer and connected to the bush (3, 3'), **characterised in that** before being connected to the longitudinal bearer, the bush (3) and the at least one bracing sheet (5) are welded together to form a pre-assembled unit.

2. A body according to claim 1, **characterised in that** the bush (3, 3') is spot-welded to one of the two shells of the longitudinal bearer and projects into the longitudinal bearer.

3. A body according to claim 1 or claim 2, **characterised in that** bush (3) and the bracing sheet (5) are welded to one another in an inert-gas atmosphere.

4. A body according to claim 1 or claim 2, **characterised in that** the bush (3') and the bracing sheet (5') are made in one piece.

5. A body according to any of the preceding claims, **characterised in that** the bush (3, 3') has an internal screw-thread.

## Revendications

1. Carrosserie de véhicule automobile comportant un longeron à structure monocoque en tôle,
le longeron étant muni d'un manchon (3, 3') pour la fixation d'une partie du châssis,
le manchon (3, 3') étant une pièce en tôle d'emboutissage profond, et
le longeron comporte au moins une tôle d'appui (5, 5') reliée au manchon (3, 3'),
**caractérisée en ce que**
le manchon (3) et la tôle d'appui (5) sont soudés l'un à l'autre pour former une unité pré-assemblée avant d'être reliés au longeron.

2. Carrosserie selon la revendication 1,
**caractérisée en ce que**
le manchon (3, 3') est soudé par une soudure par points avec l'une des deux coques du longeron et il pénètre dans le longeron.

3. Carrosserie selon la revendication 1 ou 2,
**caractérisée en ce que**
le manchon (3) et la tôle d'appui (5) sont soudés l'un à l'autre par soudage sous gaz protecteur.

4. Carrosserie selon la revendication 1 ou 2,
**caractérisée en ce que**
le manchon (3) et la tôle d'appui (5') sont réalisés en une seule pièce.

5. Carrosserie selon l'une des revendications précédentes,
**caractérisée en ce que**
le manchon (3, 3') a un filetage intérieur.
